# EUROPÄISCHE PATENTSCHRIFT

(11) **EP 3 882 060 B1**
(45) Veröffentlichungstag und Bekanntmachung des Hinweises auf die Patenterteilung: **19.10.2022**
(21) Anmeldenummer: 21000056.8
(22) Anmeldetag: 24.02.2021
(51) Int. Cl.: B60J 5/06, B60J 7/10

(54) **PLANE MIT HEBELSPANNERN UND DISTANZSTÜCKEN ZU EINEM PLANENFERNEN RAHMENBEREICH**
TARPAULIN WITH LEVER TENSIONERS AND SPACERS FROM A FRAME AREA AT A DISTANCE FROM THE TARPAULIN
BÂCHE POURVU DE TENDEURS À LEVIER ET D'ENTRETOISES POUR UNE ZONE DE CADRE À L'ÉCART DE LA BÂCHE

(30) Priorität: 16.03.2020 DE 102020001719
(43) Veröffentlichungstag der Anmeldung: 22.09.2021
(73) Patentinhaber: Keim, Thorald, 57439 Attendorn (DE)
(72) Erfinder: Thorald Keim, D-57439 Attendorn (DE); Keim, Thorald, D-57439 Attendorn (DE)
(74) Vertreter: Kuschel, Martin

(56) Entgegenhaltungen:
- DE-A1-102017 001 675
- DE-U1-202009 001 993
- DE-U1-202009 003 328

## Beschreibung

Die Erfindung bezieht sich auf eine Plane zum lösbaren Verschließen einer seitlichen Öffnung im Aufbau eines Lkws oder Güterwagens, wobei die Unterkante der Öffnung ein Rahmenprofil bildet, das einen nach unten weisenden Profilschenkel sowie innerhalb der Öffnung einen von der geschlossenen Plane beabstandeten Rahmenbereich aufweist und wobei auf der Plane mehrere flexible Gurtbänder befestigt sind, deren untere Enden jeweils mit dem Klapphebel eines Hebelspanners über ein Hebel-Gelenk gelenkig verbunden sind, und der Klapphebel über ein Haken-Gelenk gelenkig mit einem Haken verbunden ist, der im geschlossenen Zustand den Profilschenkel umgreift und der dabei einen unteren Bereich der Plane auf den Profilschenkel presst.

Auf aktuellem Stand der Technik wird zur Reduzierung von Gewicht und Kosten sowie für schnelles Be- und Entladen auf der Ladefläche von Lkw und Güterwagen ein quaderförmiger Rahmen aufgebaut, dessen seitliche Öffnungen durch je eine flexible Plane verschlossen werden, die entlang einer Rollenbahn an der Oberkante des Rahmens zusammengefaltet werden kann. Die geschlossene Plane soll die Ladung nicht nur vor Witterung und unbefugten Zugriffen schützen, sondern auch durch Versehen oder Betriebsunfall ungesicherte und deshalb bei Kurvenfahrt innerhalb des Fahrzeugs umher fliegende Ladung auffangen. Dafür verstärken aufgeschweißte oder aufgenähte, elastische Gurtbänder die Plane. Damit während der Fahrt der Sog des Fahrtwindes die Plane nicht ins Flattern bringt und dadurch vorschnell altern lässt, müssen die Gurtbänder zwischen der Oberkante und der Unterkante des Rahmens verspannt werden. Die dazu erforderliche Kraft ist so hoch, dass zwischen die Gurtbänder und die Unterkante des Rahmens Hebelspanner eingefügt werden, deren Prinzip seit langem bekannt ist.

Einen solchen Hebelspanner beschreiben die DE 441 50 42 C1, die DE 20 2009 001 993 U1 und die DE 20 2009 003 328 U1. Der wichtigste Bestandteil ist der Klapphebel mit zwei Gelenken. An das eine Gelenk wird ein Gurtband und/oder die Plane angeschlossen, das andere Gelenk ist mit dem Haken verbunden, der die Unterkante des Rahmens umgreift. Eines der beiden Gelenke ist an einem Ende des Klapphebels angeordnet, das andere in einem Abstand dazu. Dieser Abstand zwischen den beiden Gelenken, der "kurze" Hebelarm, ist erheblich kleiner als der Abstand zum freien Ende des Klapphebels, dem "langen" Hebelarm, an dem der Nutzer angreift. Dank dieses langen Hebelarms kann der Nutzer mit geringer Anstrengung eine recht große Zugkraft zwischen den beiden Gelenken erzeugen und so die Gurtbänder und dadurch auch die Plane spannen.

Es ist kaum von Nachteil, dass dazu der Klapphebel um etwa 180° verschwenkt werden muss, was die Zeit der Betätigung gegenüber einem manuellen Spannen der Plane nur unwesentlich verlängert.

Viel nachteiliger ist, dass der untere Streifen der Plane von der Anbindung des Gurtbandes an das Gelenk im Klapphebel bis herunter zur Unterkante des Rahmens nicht gespannt wird. Nur das Gewicht und die begrenzte Elastizität lassen den unteren Streifen der Plane vor dem Spannen halbwegs glatt senkrecht herunter hängen.

Wenn bei der Anordnung gemäß DE 20 2009 001 993 U1 zum Spannen der vertikalen Plane der Klapphebel um 90° verschwenkt ist, dann steht er in einer etwa horizontalen Position. In dieser Stellung hat der Klapphebel "seinen" gelenkig angebundenen Haken in der Ebene der Plane schon soweit an sich heran gezogen, dass er Zugriff auf das untere Ende der Plane bekommen hat. In dieser Stellung stehen die beiden Gelenke im Klapphebel horizontal nebeneinander. Weil das planenseitige Gelenk oberhalb des Rahmenprofils angeordnet ist und deshalb keinen festen Gegenhalt finden kann, lenkt es die Plane zur Seite hin aus, woraufhin sich der freie untere Streifen der Plane etwas anhebt. Abweichend von der Darstellung der DE 20 2009 001 993 U1, bei der dieser untere Streifen das Rahmenprofil nur berührt, wird er in der Praxis so wie es die DE 10 2017 001 675 A1 andeutet und die DE 20 2009 003 328 U1 zeigt, über die Unterkante des Rahmenprofils hinaus verlängert, sodass der Haken weiter unten auf der Plane zugreift. Sobald der Klapphebel dann weiter verschwenkt wird, schiebt der Haken die Unterkante der Plane weiter nach oben, so dass sich eine oder mehrere unerwünschte Falten im unteren Bereich bilden.

Dieser Effekt tritt insbesondere dann auf, wenn sich in unmittelbarer Nähe zur Unterkante des Rahmens angrenzend an die Innenseite der Plane ein seitlicher Freiraum öffnet, in den hinein sich ein Gelenk des Klapphebels bewegen kann. Auf einen solchen Freiraum weist die DE 10 2016 108 827 hin: An der seitlichen Kante des Laderaumbodens ist eine Befestigungsschiene angeordnet, in deren lochartige Ausschnitte die Haken von Spanngurten eingehakt werden. Damit die Haken Platz finden, ist die Befestigungsschiene in einem seitlichen Abstand zur Plane angeordnet. Wiederum gemäß DE 441 50 42 C1 und DE 20 2009 001 993 U1 bildet unterhalb der Befestigungsschiene ein Profilschenkel die Unterkante der Öffnung im Aufbau.

Ein Profil, das eine solche Befestigungsschiene und einen derartigen Profilschenkel aufweist, bietet die Firma Krone als Multi Safe-System an. Für eine im Prinzip gleiche Konfiguration hat die Firma Schmitz Cargobull die Wortmarke MULTI LOCK unter der Nr. 301 48 393 beim DPMA registrieren lassen. Ein ähnliches Rahmenprofil vermarktet die Fa. Kögel als VarioFix-Stahl-Lochaußenrahmen.

Bei allen diesen Rahmenprofilen dient der von der Plane nach innen hin beabstandete und durch eine waagrechte Zone getrennte Rahmenbereich dazu, die Haken von Spanngurten in Löcher im Rahmenbereich einzuhaken. Außerdem können daran stählerne Befestigungstaschen für vertikale Stützen, die sogenannten Rungen, aufgeschweißt oder andersartig befestigt werden.

Auch die DE 10 2017 001 675 A1 zeigt einen prinzipiell gleichen Hebelspanner wie bei den vorherigen Druckschriften. Und dazu ein Rahmenprofil, das den Profilen der vorgenannten drei Firmen im Prinzip gleicht, also ebenfalls einen von der Plane nach innen hin beabstandeten und durch eine waagerechte Zone getrennten Rahmenbereich aufweist.

Bei der DE 20 2009 001 993 U1 fehlt zwar dieser nach innen hin von der Plane beabstandete Rahmenbereich. Aber der nach unten weisende Schenkel des Rahmenprofils ist derart kurz, dass ebenso wie bei der DE 10 2017 001 675 A1 während des Spannens das planenseitige Gelenk des waagerecht ausgerichteten Klapphebels keinen Gegenhalt am Rahmenprofil findet und deshalb die Plane nach innen drückt.

Nachteilig ist, dass dadurch der unterste Abschnitt der Plane nur so unvollkommen gespannt wird, dass er auch nach dem Spannen noch unschöne, horizontale Falten aufweist.

Auf diesem Hintergrund hat sich die Erfindung die Aufgabe gestellt, eine vertikale, mit Gurtbändern verstärkte Seitenplane eines Lkws oder Güterwagens mit mehreren Hebelspannern möglichst glatt zu spannen, die den unteren, frei hängenden Teil der Plane jeweils mit einem Haken auf den nach unten weisenden kompakten, gewichtsund kostensparenden Profilschenkel eines Rahmenprofils drücken, wobei sich an die Oberseite dieses Profilschenkels ein nach innen hin zurück gesetzter Rahmenbereich anschließt, in den sich jeweils ein Gelenk des Hebelspanners hinein bewegen kann, wobei auch der Bereich der Plane auf Höhe der Hebelspanner eine möglichst geringe Anzahl von nur sehr flachen Falten aufweisen soll.

Als Lösung dieser Aufgabe lehrt die Erfindung, dass die freie Länge des Hakens größer als die Breite des Profilschenkels ist und dass auf der Innenseite der Plane gegenüber wenigstens einem Hebel-Gelenk jeweils ein Distanzstück befestigt ist, das im geschlossenen Zustand der Plane deren Abstand vom Rahmenbereich zumindest teilweise überbrückt.

Weil bei der Konstruktion von Aufbauten für Lkw und Güterwagen um jeden zusätzlichen Kubikzentimeter im Innenraum und jedes eingesparte Kilogramm an Gewicht intensiv gerungen wird, haben sich Rahmenprofile durchgesetzt, bei denen der untere Profilschenkel zum Auflegen und Spannen der Seitenplane so kurz ist, dass seine Schenkellänge nur zum Hintergreifen durch den Haken des Hebelspanners ausreicht. Der darüber folgende Bereich des Rahmens ist nach innen hin zurückgesetzt und in Abständen durchlöchert, damit in diese Löcher Spanngurte eingehakt werden können. Dadurch werden separate Ösen in der Ladefläche eingespart. Zusätzlich können in diesem Rahmenbereich die stählernen Befestigungstaschen für die Rungen raumsparend untergebracht werden. Da zu einem ausreichend flatterarmen Spannen der PVC-Planen bei den üblichen Höhen der Lkw-Aufbauten ein Spannweg erforderlich ist, der länger als der Profilschenkel an der Unterkante des Rahmenprofils ist, kann der Haken im Hebelspanner nicht ohne Weiteres auf die relativ geringe Länge des Profilschenkels verkürzt werden. Ein derart extrem kurzer Haken müsste beim Einhaken auf den nach unten weisenden Profilschenkel einen so großen Winkel zur Schenkelfläche einnehmen, dass das "Maul" des Hakens den Profilschenkel nicht mehr sicher umgreifen kann. Nachteilig wäre auch, dass ein solcher kurzer Haken mit sehr hoher Kraft manuell auf die Plane gedrückt werden müsste, um sie zu greifen.

Deshalb ist es üblich und sinnvoll, den Haken länger als den nach unten weisenden Profilschenkel zu dimensionieren, so dass er im eingehakten Zustand über den Profilschenkel nach oben hin hinaus ragt. In dieser vorbekannten Konfiguration muss hingenommen werden, dass die Gelenke im Hebelspanner keine seitlich wirkende Auflage im Rahmen haben, was nachteiliger Weise mehrere tiefe Falten hinter den Hebelspannern bewirkt.

Diese Faltenbildung wird gemildert, wenn oben an den Hebelspanner ein Stück Gurtband angesetzt wird, das auf der Außenseite der Plane nur aufliegt und erst weiter oben mit einer Verschraubung durch die Plane hindurch mit dem innen liegenden Gurtband verbunden ist. Sinnvoller Weise sollte dieses freie Außengurtband viel länger als der Hebelspanner sein. Während des Spannvorganges drückt sich dann der Hebelspanner mit seinem Gelenk nicht mehr sehr weit in die bereits etwas gespannte Plane ein, sondern spreizt das Außengurtband ab.

Leider vergrößert sich dadurch der untere Bereich der Plane, der nicht direkt durch den Hebelspanner gespannt wird. Nachteiliger Weise flattert das Außengurtband während der Fahrt, wodurch es schnell altert und verschmutzt. Außerdem schränkt es die Nutzung der Plane als Werbefläche ein.

Im Gegensatz dazu werden gemäß der Erfindung die Gurtbänder innen auf der Plane bis zu den Hebelspannern geführt, um so weit unten wie möglich durch die Plane hindurch eine Verbindung zum Hebelspanner herzustellen, zum Beispiel durch eine Verschraubung. Dass in dieser Konfiguration der Spanner beim Verschließen nicht nach innen in die Plane hinein gedrückt wird, verhindert das eigentlich verdienstvolle Merkmal der Erfindung, nämlich das Distanzstück, das auf der Innenseite der Plane gegenüber dem Hebel-Gelenk des Klapphebels angeordnet ist.

In der Phase des Schließvorganges, während derer der Klapphebel senkrecht zur Plane ausgerichtet ist, wird durch die beginnende Spannung der Plane ein Druck in Längsrichtung des Klapphebels aufgebaut. Mit dieser Kraft drückt der Klapphebel auf sein Hebel-Gelenk, das wiederum eine seitlich wirkende Kraft auf die Plane ausübt. Dieser Kraftvektor bewirkt jedoch keine seitliche "Ausbeulung" der Plane, weil direkt dahinter das Distanzstück die Kraft aufnimmt und auf den beabstandeten Rahmenbereich weiterleitet.

Idealer Weise sollte das Distanzstück senkrecht zur Plane die Abmessung haben, um die der beabstandete Rahmenbereich gegenüber dem Profilschenkel nach innen versetzt ist. Wenn das Distanzstück schmäler ist, wird eine entsprechende Faltenbildung in der Plane möglich. Ist das Distanzstück zu "dick", so beult es die Plane unzulässigerweise nach außen hin aus. In einer sehr einfachen Ausführungsform der Erfindung ist das Hebel-Gelenk des Hebelspanners auf der Außenseite der Plane direkt oder nur mit einem sehr kurzen Verbindungsstück, wie zum Beispiel einem Bügel oder einem Paar Bolzen durch die Plane hindurch mit dem Gurtband auf der Innenseite der Plane verbunden.

Dabei kann das Hebelgelenk zur Anbindung des Gurtbandes entweder am Ende des Klapphebels angeordnet werden oder mit einem Abstand vom Ende. In der ersten Ausführungsform wird der Klapphebel zum Spannen der Plane nach oben verschwenkt, in der zweiten Variante nach unten.

In der letztgenannten, zweiten Konfiguration ist das Haken-Gelenk am Ende des Klapphebels angeordnet. Dadurch liegen der Haken und "sein" Haken-Gelenk im offenen ebenso wie im geschlossenen Zustand des Hebelspanners auf oder mindestens sehr nahe zur Außenseite der Plane. Das Hebel-Gelenk mit dem daran angebundenen Gurtband beschreibt beim Spannen einen Kreisbogen, entfernt sich also während des Spannens erst von der Außenfläche der Plane und ist am Ende des Spannens, wenn der Klapphebel nach unten zeigt, wieder zur Außenfläche zurückgekehrt, jedoch in einer tieferen Position. Der dabei zurück gelegte Weg ist das Doppelte des Abstandes zwischen den beiden Gelenken im Klapphebel. Um einen größeren Teil dieser Länge werden die Plane, das Gurtband sowie das daran befestigte Distanzstück mit nach unten gezogen b.z.w. geschoben, wenn die Steife der Plane und die Gleitfähigkeit der Oberflächen das ermöglichen. Das Distanzstück gleitet also auf dem nach innen hin zurück gesetzten Rahmenbereich abwärts.

Für den Fall, dass die verfügbare vertikale Weglänge des Distanzstückes auf dem Rahmenbereich nicht ausreichen sollte, schlägt die Erfindung vor, dass eine gegenüber dem Distanzstück in vertikaler Richtung vergrößerte und druckfeste Andruckplatte an die planenseitige Auflagefläche des Distanzstückes angeformt ist. Alternativ kann eine zusätzliche Platte an der Innen- oder an der Außenseite der Plane in die Verbindung von Plane und Distanzstück integriert werden. Dadurch wird sichergestellt, dass das Gelenk am Ende des Klapphebels in allen dessen Winkelstellungen stets einen Gegenhalt in der Ebene des Profilschenkels findet. Ein Wegkippen in den Raum zwischen Plane und zurückgesetztem Rahmenbereich ist ausgeschlossen.

In der erstgenannten Konfiguration sind die Anbindungen der beiden Gelenke im Klapphebel gegenüber der folgenden, zweiten Variante vertauscht: Das Hebel-Gelenk mit dem Gurtband ist am Ende des Klapphebels angeordnet, das Haken-Gelenk ist davon beabstandet. In dieser Ausführungsform weist der Klapphebel bei ungespannter Plane nach unten und wird zum Spannen nach oben hin verschwenkt. Das Haken-Gelenk beschreibt während des Spannens einen Kreisbogen, entfernt sich also vorübergehend von der Ebene der Plane und des Gurtbandes, wohingegen das Hebel-Gelenk stets in dieser Ebene bleibt. Auch in dieser Konfiguration bewegt sich das Distanzstück während des Spannens vertikal auf dem nach innen zurückgesetzten Rahmenbereich. Damit das Hebel-Gelenk in jeder Winkelstellung des Klapphebels nach innen hin ein Widerlager findet, kann auch in dieser zweiten Ausführungsform die vorgenannte Andruckplatte als Anformung am Distanzstück oder als zusätzliches Bauteil sinnvoll sein.

Diese zweite Variante, bei der das Hebel-Gelenk an einem Ende des Klapphebels angeordnet ist, nutzt den Vorteil des erfindungsgemäßen Distanzstückes auch bei recht kurzen Haken. Nämlich dann, wenn die freie Länge des Hakens größer als die Breite des Profilschenkels zuzüglich des Radiusses des Hebel-Gelenks und zuzüglich dessen Abstandes zum Haken-Gelenk ist. Geometrisch ist es denkbar, dass der Haken nur wenig länger ist, als der Abstand zwischen den beiden Gelenken. Dann müsste sich der Haken jedoch bei senkrecht zur Plane stehendem Klapphebel ebenfalls fast senkrecht zur Planenebene ausrichten. Das Maul des Hakens wäre dann zu einem Winkelstück deformiert, dass keinen sicheren Halt mehr auf dem nach unten weisenden Profilschenkel finden würde. Deshalb ist diese Dimension nicht praxisgerecht.

Ebenso unpraktisch ist das andere Extrem einer Maulweite, die kaum größer als die Dicke des Profilschenkels zuzüglich der dazwischen eingespannten Plane ist. Bei einer solchen Konfiguration kann der Haken nur dann auf den Profilschenkel aufgeschoben werden, wenn er nahezu parallel zum Profilschenkel ausgerichtet ist oder zumindest nur um einen sehr kleinen Winkelbetrag davon abweicht. Dann müsste der Haken extrem lang sein, was zu schwer, zu teuer, zu auffällig und zu unhandlich wäre. Deshalb bevorzugt die Erfindung, dass die Maulweite des Hakens erheblich größer als die Dicke des Profilschenkels ist.

Die freie Länge des Hakens sollte nur ein geringes Vielfaches des Schwenkradius' des endfernen Gelenkes im Klapphebel sein. Das aber lässt den Haken in der Praxis dennoch fast immer länger als die Breite des Profilschenkels werden, weshalb dann das erfinderische Distanzstück benötigt wird.

In der Praxis wird der gegenüber dem Profilschenkel nach innen zurückgesetzte Rahmenbereich in den meisten Fällen im Wesentlichen eine Ebene sein, die zur geschlossenen Plane parallel ausgerichtet ist. Im geschlossenen und gespannten Zustand der Plane liegt das Distanzstück mit seiner Berührungsfläche auf diesem Rahmenbereich auf. Dabei ist es im Prinzip unerheblich, welche Form und Größe diese Berührungsfläche hat. Wenn das Distanzstück beispielsweise als Kugel geformt ist, drückt es nur mit einer relativ sehr kleinen Kreisfläche auf den Rahmenbereich. Um Abnutzung und Schäden am Rahmenbereich und/oder am Distanzstück möglichst zu vermeiden, bevorzugt die Erfindung, dass die Berührungsfläche ein Rechteck ist, dessen Breite abzüglich eines erforderlichen vertikalen Bewegungsspielraumes die Länge des Profilschenkels nicht überschreitet und dessen Länge der Breite des Hebelspanners gleicht. Daraus ergibt sich ein Quader als Form.

Für den Fall, dass sich das Distanzstück reibungsarm auf dem Rahmenbereich bewegen soll, kann dessen Berührungsfläche auch mit einer gut gleitenden Beschichtung versehen werden oder sogar als Rolle ausgebildet werden.

Prinzipiell ist jede beliebige Form für das Distanzstück möglich. Ebenso gibt es keine prinzipiellen Einschränkungen für das Material des Distanzstückes. Metall, Kunststoff oder sogar Holz sind möglich und können nach Kriterien gewählt werden, die nicht mit der Funktion verbunden sind.

Eine Randbedingung für die Formgebung des Distanzstückes ergibt sich jedoch aus der Bewegung der Plane beim Öffnen und Schließen. Da alle Distanzstücke prinzipbedingt in der gleichen Ebene wie die Rungen angeordnet sind, kann jedes Distanzstück an jede Runge anstoßen, die es während der Bewegung passieren muss. Die Wahrscheinlichkeit für diese Berührungen sind jedoch niedrig, weil die Plane nur in Abschnitten händisch in Bewegung gesetzt wird und dabei die Unterkante der Plane mit den Hebelspannern und den Distanzstücken im Abstand zu den Rungen gehalten wird.

Für den Fall, dass nur so kurze Abschnitte der Plane bewegt werden, dass nicht alle Distanzstücke aus der Ebene der Rungen heraus zur Seite geschwenkt werden können, schlägt die Erfindung vor, dass wenigstens eine, aber besser beide, an die Berührungsfläche angrenzenden Rungenkontaktflächen möglichst aller Distanzstücke einen spitzen Winkel mit dem Rahmenprofil bilden. Dann wirken die Rungenkontaktflächen wie ein Keil, der ab der ersten Berührung mit einer Runge das Distanzstück kontinuierlich zur Seite drückt.

Die Dynamik dieser Bewegung wird dadurch verbessert, dass alternativ die Rungenkontaktflächen als eine S-förmige Welle geformt sind. Idealerweise steigt diese S-Kurve kontinuierlich aus der Ebene der Plane heraus an und geht dann ebenfalls stetig in die Berührungsfläche des Distanzstückes über. Das so geformte Distanzstück wird beim allerersten Auftreffen auf eine Runge zuerst nur sanft zur Seite hin beschleunigen. Mit zunehmender Steilheit der S-Form beschleunigt sich die seitliche Bewegung ruckfrei. Wenn das Ende dieser Seitwärtsbewegung näher kommt, sinkt die Geschwindigkeit der seitlichen Bewegung wieder kontinuierlich ab und ist auf Null gesunken, wenn das Distanzstück vollständig zur Seite heraus geschwenkt worden ist und an der Runge entlang gleitet. Dadurch werden Stöße beim Auftreffen eines Distanzstückes auf eine Runge stark abgemildert.

In der Praxis wird die Rungenkontaktfläche vorzugsweise aus einem Kunststoff mit einer sehr guten Gleitfähigkeit, also sehr niedrigen Haft- und Gleitreibungsbeiwerten bestehen. Da deren Lebensdauer aber recht kurz sein kann, ist es eine Alternative, dass in die Rungenkontaktflächen wenigstens eine Rolle oder ein Rad eingebaut ist, welche(s) sich auf den Rungen abrollen kann.

Das zuvor beschriebene Distanzstück ist prinzipiell für alle denkbaren Konfigurationen von Hebelspannern einsetzbar, die an einem Rahmenprofil verwendet werden, das oberhalb eines nach unten weisenden Profilschenkels einen nach innen hin zurückgesetzten Rahmenbereich aufweist.

In jedem Fall ist jeder Hebelspanner mit je einem Gurtband verbunden, dass auf der Plane befestigt ist. In der Praxis sind diese Gurtbänder stets senkrecht ausgerichtet. Wenn sie an ihrem oberen Ende mit einem Wickelbaum verbunden sind, auf den die Plane zum Öffnen aufgewickelt wird, wird das Glattziehen und Spannen der geschlossenen Plane vorrangig durch eine kleine Drehung des Wickelbaums erledigt werden. Dann sind am unteren Ende der Gurtbänder zusätzliche Hebelspanner zumeist entbehrlich und deshalb selten. Wenn hingegen die Plane als Side-Curtain zum Öffnen zur Seite geschoben werden muss, spannen die Hebelspanner die geschlossene Plane schön glatt und verhindern dadurch deren Flattern während der Fahrt. Das bringt nicht nur eine Werbung auf der Plane besser zur Geltung, sondern verlängert auch die Lebensdauer.

Zwar wäre es denkbar, die Gurtbänder auf der Außenseite der Plane anzubringen. Wegen schnellem Verschmutzen und vorschneller Alterung durch UV-Strahlen wird jedoch eine Befestigung auf der Innenseite der Plane klar bevorzugt. Weil die Hebelspanner auf der Außenseite der Plane angeordnet werden müssen, müssen auch die unteren Enden eines jeden Gurtbandes durch die Plane hindurch geführt und mit einem Hebelspanner verkoppelt werde.

Prinzipiell ist es denkbar, das Gurtband durch einen Schlitz in der Plane hindurch direkt mit dem Hebelgelenk des Hebelspanners zu verbinden. Aber weil dieser Schlitz gegen das mögliche Einreißen der Plane aufwendig verstärkt werden müsste, ist es zu bevorzugen, das Gurtende mit wenigstens einer Verschraubung und/oder einer Niete und/oder einer anderen mechanischen Verbindung durch die Plane hindurch und weiter über ein Koppelstück mit dem Hebel-Gelenk zu verkoppeln.

Im einfachsten Fall reicht als Koppelstück ein kurzes Stück Gurtband oder ein U-förmiger Bügel aus, um von der Fläche der Planenaußenseite die Verbindung zum Hebelgelenk herzustellen. Je nach dessen Ausführung kann dieses Gelenk nur dann auf der Plane aufliegen und dennoch beweglich bleiben, wenn es zumindest zur Planenseite hin zylindrisch geformt ist.

Es ist eine prinzipielle Einschränkung dieser sehr einfachen Konfiguration, dass der Hebelspanner die Plane grundsätzlich immer mit dem mechanisch fest vorgegeben Weg spannt, nämlich dem Doppelten des Abstandes zwischen dem Hebel-Gelenk und dem Haken-Gelenk.

Wenn sich die Plane durch Alterung und/oder sommerliche Umgebungstemperatur längt oder im Winter verkürzt, kann der Spannbereich des Hebelspanners nicht mehr ausreichen. Dann muss eine zusätzliche Längenjustage eingebaut werden, die sinnvoller Weise auch als Koppelstück zwischen der Verschraubung des Gurtendes und dem Hebelspanner dient. Als Ausführungsformen schlägt die Erfindung ein kurzes Gurtband mit einer lösbaren Klemmvorrichtung vor, mit der die Länge stufenlos justiert werden kann. Gestuft ist die Längenveränderung mit einer Vorrichtung zum Auf- und Abwickeln für ein Gurtband, wenn der Wickler durch ein Zahnrad mit einer Sperrklinke blockiert wird. Ebenfalls stufenweise verstellbar ist eine Kette, ein Lochband oder eine Zahnstange, die in ein Gegenstück einhängbar ist.

Für diese Doppelfunktion der Kopplung und Längenjustage alternativ bewährt ist eine Gewindestange mit einer Gewindemutter, die in einem Lagerbock einhakbar ist. Diese Variante wird in dieser Anmeldeschrift zeichnerisch vorgestellt und im später Folgenden noch besprochen.

Bei der Längenjustage ist zu beachten, dass sich dadurch das Hebelgelenk in vertikaler Richtung so weit vom erfinderischen Distanzstück entfernen kann, dass es während des Verschwenkens keine seitliche Auflage mehr findet, sondern in die Plane einsinkt, was der Aufgabenstellung der Erfindung diametral entgegensteht. Diesem Effekt kann, wie bereits erwähnt, durch eine Andruckplatte am Distanzstück entgegengewirkt werden. Wenn eine solche Platte auf der Innenseite der Plane nicht weiter verlängert werden kann, unerwünscht oder unmöglich ist, so schlägt die Erfindung vor, dass an das Koppelstück eine Auflageplatte angeformt oder angefügt ist. Alternativ kann das Koppelstück selbst als eine Auflageplatte ausgebildet werden. Stets liegt diese Auflageplatte auf der Außenseite der Plane auf.

Wenn das Hebelgelenk, das definitionsgemäß mit dem Gurtende verbunden ist, am Ende des Klapphebels angeordnet ist, also der in dieser Anmeldeschrift auch zeichnerisch dargestellten Ausführungsvariante des Hebelspanners entspricht, ist es vorteilhaft, die zuvor genannte Auflageplatte nach unten hin über das Hebelgelenk hinaus zu verlängern. Dann hat der Hebelspanner bei sehr stark verkürzter Längenjustage im Koppelstück und/oder relativ langem Haken immer noch einen Kontakt zum Distanzstück. Je länger die Auflageplatte ist, desto weniger drückt sie sich während des Spannens in die die Plane hinein, desto geringer ist auch die Faltenbildung der Plane in ihrem unteren Bereich.

Bereits erläutert wurde die Größe der Maulweite des Hakens. Sie sollte deutlich größer als die Dicke des nach unten weisenden Profilschenkels sein. Die maximal mögliche Größe wird dadurch begrenzt, dass die Spitze des Mauls im gespannten Zustand der Plane nicht von unten her an die waagerechte Zone des Rahmens anstoßen darf, die das Profilstück mit dem Rahmenbereich verbindet.

Ein starkes Argument für eine relativ große und idealer Weise als Segment eines recht großen Kreisbogens geformte Maulöffnung des Hakens ist, dass sich der freie untere Streifen der Plane in den Grenzen seiner Flexibilität in diese Maulöffnung hinein schiebt und sich dort schon krümmt, sobald sich der Haken zu Beginn des Spannens nach oben hebt und in Kontakt mit der Plane tritt. Je weiter sich das freie Ende der Plane noch in das Maul hinein schiebt, desto weiter oben greift das Maul fest darauf zu und desto besser und faltenärmer wird die Plane gespannt.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1.: Seitenansicht eines Lkw mit rahmenförmigem Aufbau und zur Hälfte geöffnetem Side-Curtain.
- Figur 2.: Schnitt durch das Rahmenprofil aus Fig. 1 mit einem Hebelspanner, jedoch OHNE das erfindungsgemäße Distanzstück.
- Figur 3.: Schnitt durch das Rahmenprofil aus Fig.1 mit einem Hebelspanner und MIT einem erfindungsgemäßen Distanzstück.
- Figur 4.: Aufsicht auf ein erfindungsgemäßes Distanzstück mit S-förmiger Rungenkontaktfläche.

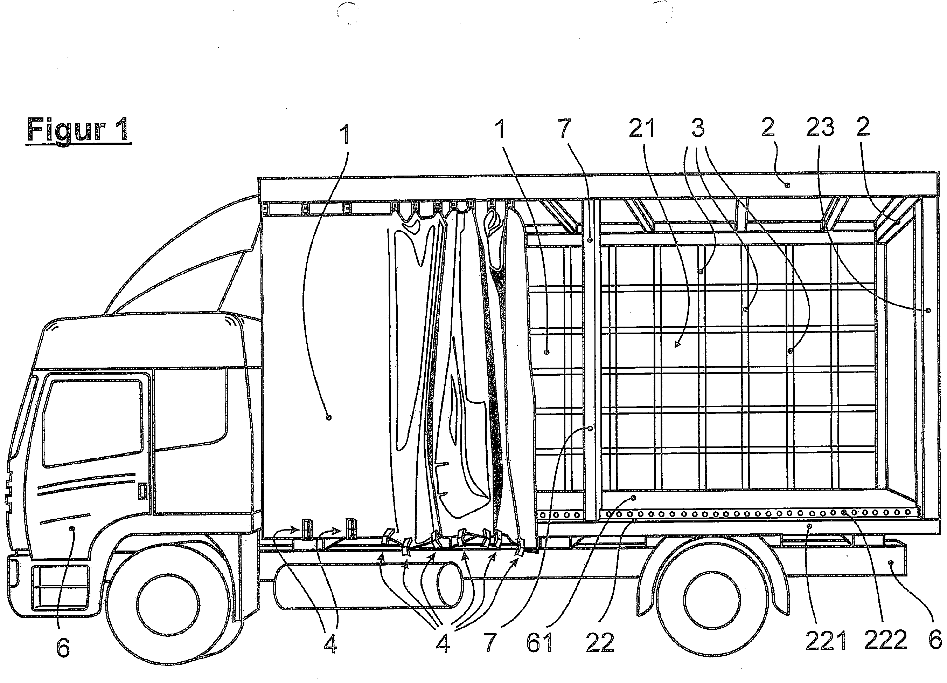

In **Figur 1** ist ein Lkw 6 dargestellt, dessen seitliche Öffnungen 21 in einem rahmenförmigen Aufbau 2 durch je eine Plane 1 abgedeckt werden. Gezeichnet ist ein Zustand, in dem die in Fahrtrichtung linke Plane 1 auf ein Drittel zusammengeschoben ist. Nur ein schmaler Bereich dieser Plane 1 ist noch durch die Hebelspanner 4 glatt gespannt. Der übrige Bereich der Plane 1 ist unregelmäßig zusammengefaltet, so dass ihr unterster Bereich etwas weiter nach unten hängt, da er nicht mehr um den nach unten weisenden Profilschenkel 221 des Rahmenprofils 22 herum gefaltet ist. Die Hebelspanner 4 in diesem gefalteten Bereich sind geöffnet und hängen deshalb auch weiter nach unten.

Im geöffneten Bereich der Öffnung 21 wird auf der vom Bildbetrachter entfernten, rechten Seite des Lkw 6 die Innenseite der dortigen Plane 1 sichtbar, die vollständig geschlossen und gespannt ist. Darauf sind die vertikalen Gurtbänder 3 gut zu erkennen, die von der Oberkante des Aufbaus 2 bis zur Unterkante gespannt sind. Davon nicht beeinflusst sind die horizontalen Gurtbänder.

In der Perspektive der Figur 1 ist auf der rechten Lkw-Seite das Rahmenprofil 22, das die Unterkante der Öffnung 21 begrenzt, nicht sichtbar, weil es von innen durch die Ladefläche 61 des Lkw 6 verdeckt wird. Aber an der dem Betrachter näheren, in Fahrtrichtung linken Lkw-Seite ist das Rahmenprofil 22 sehr gut zu erkennen. Es besteht aus dem unteren Profilschenkel 221 und dem oberen Rahmenbereich 222. Dass der obere Rahmenbereich 222 gegenüber dem unteren Profilschenkel 221 weiter nach innen versetzt ist, ist durch die perspektivische Darstellung des Fußes der Runge 7 und der Basis des vertikalen Pfostens 23 am rückwärtigen Ende des Aufbaus 2 gut erkennbar. Sowohl die Runge 7 als auch der Pfosten 23 sind auf die waagerechte Zone des Rahmens 22 zwischen dem Rahmenbereich 222 und dem Profilschenkel 221 aufgesetzt. Dadurch fluchten die Außenseiten der Runge 7 und des Pfostens 23 mit dem Profilschenkel 221, so dass die Plane 1 eine vollständig ebene Auflagefläche hat, auf der sie gut gespannt werden kann. In Figur 1 ist gut nachvollziehbar, dass die Plane 1 beim Öffnen und Schließen an der Runge 7 entlang gleitet. Alles was von der Innenfläche der Plane 1 weiter nach innen ragt, also auch das - in Figur 1 nicht sichtbare - erfinderische Distanzstück 5, muss sich an der Runge 7 vorbei bewegen und dazu die Plane 1 etwas nach außen drücken.

Nicht in Figur 1 dargestellt sind die Spannhaken, die in die zahlreichen Löcher im Rahmenbereich 222 eingehängt werden können. Für diese Funktion ist der Rahmenbereich gegenüber dem Profilschenkel 221 nach innen versetzt.

In Figur 1 nicht sichtbar sind die erfinderischen Distanzstücke 5, weil sie von der Plane 1 und den Hebelspannern 4 verdeckt werden.

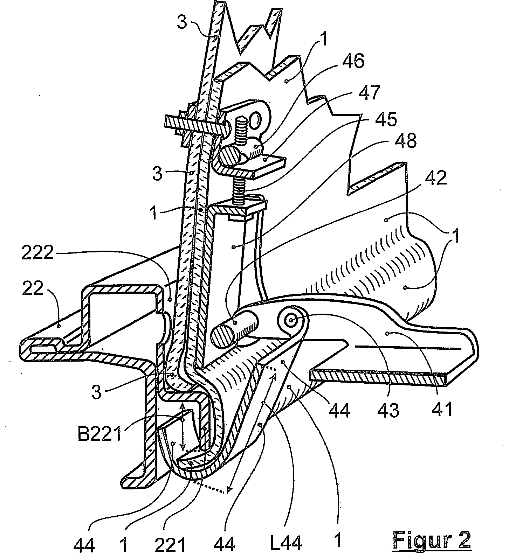

Auch die **Figur 2** zeigt die erfinderischen Distanzstücke 5 nicht, sondern gibt diesbezüglich den Stand der Technik wieder. In Figur 2 ist das Rahmenprofil 22 des Lkws 6 aus Figur 1 im Querschnitt dargestellt. Es besteht aus gefaltetem, dicken Stahlblech: Ganz links ist die Auflage für die - hier nicht eingezeichnete - Ladefläche 61 geformt. Daran schließt sich das Profil des Rahmenbereiches 222 an, an dessen rechter Seite ein Loch erkennbar ist, in das ein - hier ebenfalls nicht eingezeichneter - Haken einer Ladesicherung eingehängt werden kann. Auf den Rahmenbereich 222 folgt eine waagerechte Zone, auf der in Figur 1 eine Runge 7 ruht. Von dieser Zone ist nach unten hin der Profilschenkel 221 abgewinkelt. In Figur 2 ist sehr gut zu sehen, dass der Rahmenbereich 222 hinter den Profilschenkel 221 zurückgesetzt ist.

In Figur 2 wird das erste erfinderische Merkmal deutlich, nämlich dass die Breite B221 des Profilschenkels 221 kürzer ist, als die freie Länge L44 des Hakens 44. Die Breite B221 ist so klein gewählt, dass der freie Schenkel des Hakens 44 den Profilschenkel 221 grade noch hintergreifen kann, ohne nach oben hin an die waagerechte Zone zwischen Profilschenkel 221 und Rahmenbereich 222 anzustoßen. Der freie Schenkel des Hakens 44 ist so lang, dass er auch bei höherer Belastung und bei Vibrationen des Lkws 6 nicht vom Profilschenkel 221 abrutscht.

In Figur 2 ist sehr schön nachvollziehbar, dass der Haken 44 nicht kürzer sein kann, weil andernfalls auch bei einem ganz nach unten verschwenkten Klapphebel 41 das Maul des Hakens 44 nicht mehr an der Unterkante des Profilschenkels 221 vorbei bewegt werden könnte, um ihn zu hintergreifen.

In Figur 2 wird der wesentliche Nachteil des aktuellen Standes der Technik deutlich, nämlich die ganz große Falte nahe dem unteren Rand der Plane 1 im ansonsten oberhalb des Lagerbockes 47 gespannten Zustand.

Figur 2 zeigt einen Zustand von Plane 1 und Hebelspanner 4, bei dem der Nutzer den Klapphebel 41 schon um rund 90° seines Schwenkweges von insgesamt etwa 180° bewegt hat. Der Nutzer hat zusätzlich den Haken 44 bereits gegen die Plane 1 und damit die Plane 1 gegen den Profilschenkel 221 gedrückt, so dass das Maul des Hakens 44 die Unterkante der Plane 1 bereits ergriffen und nach innen abgebogen hat. Dank der etwa halbkreisförmigen Form des Hakenmaules ist die Plane 1 innerhalb des Mauls entlang geglitten und hat sich unter dem Profilschenkel 221 hindurch bewegt. Das freie Ende der Plane 1 befindet sich bereits innerhalb des Rahmenprofils 22. Durch weiteres Verschwenken des Klapphebels 41 wird das Maul des Hakens 44 angehoben und presst das freie Ende der Plane 1 auf den Profilschenkel 221, so dass die Plane 1 den Innenraum des Aufbaus 2 nach außen hin abdichtet.

Der entscheidende Nachteil ist jedoch, dass dabei der streifenförmige Bereich der Plane 1, der sich gegenüber dem nach innen versetzten Rahmenbereich 222 befindet, eine große Falte bildet. Sie bildet sich, weil in dem dargestellten Betriebszustand der Klapphebel 41 etwa senkrecht auf der Plane 1 steht und sie dabei über das Hebel-Gelenk 42 und die damit verbundene Auflageplatte 48 in den Freiraum vor dem Rahmenbereich 222 hinein drückt. Die dafür erforderliche Kraft senkrecht zur Plane entsteht dadurch, dass der Klapphebel 41 den Haken 44 bereits soweit an den Profilschenkel 221 herangehoben hat, dass sich eine Zugkraft in der Plane 1 aufbaut. Und zwar oberhalb des Lagerbocks 47, der mit der Plane 1 verschraubt ist. Diese Zugkraft ist an den Lagerbock 47 über die Gewindemutter 46, die darin eingeschraubte Gewindestange 45, die daran hängende Auflageplatte 48 und das Hebelgelenk 42 vom Klapphebel 41 weitergeleitet worden. Aber in diesem Betriebszustand ist die Plane 1 zwischen Haken 44 und Profilschenkel 221 noch nicht ganz fest eingeklemmt, so dass sie wieder etwas aus dem Maul des Hakens 44 herausgezogen wird und in die große Falte vor dem Rahmenbereich 222 hinein gedrückt wird.

Bei weiterem Verschwenken des Klapphebels 41 steigt die Spannkraft in der Plane 1 weiter an, so dass der Haken 44 mit so großer Kraft auf die Plane 1 drückt, dass sie sich nicht mehr gegenüber dem Profilschenkel 221 bewegt. Wenn der Klapphebel 41 ganz nach unten verschwenkt worden ist, hat er über die miteinander verketteten Hebelgelenk 42, Auflageplatte 48, Gewindestange 45, Gewindemutter 46 und Lagerbock 47 die Plane 1 oberhalb des Lagerbocks 47 wunschgemäß straff gezogen, so dass sie während der Fahrt nicht flattert. Durch Verschwenken der Gewindemutter 46 auf dem Lagerbock 47 verkürzt sich die wirksame Länge der Gewindestange 45, über die der Nutzer je nach Alter und Temperatur der Plane 1 den nicht variablen Spannweg des Klapphebels 41 um einen veränderbaren Wert vergrößert oder verkleinert hat.

Aber unterhalb des Lagerbocks 47 hat sich in der Plane 1 eine große Falte gebildet, in der sich Schmutz sammelt. Durch Flattern während der Fahrt verschleißt sie vorschnell. Eine weitere Belastung entsteht durch die untere Kante der Auflageplatte, die sich unvermeidbar in die unerwünschte Falte hinein drückt und deren Knickung verschlimmert. Dadurch wird die Falte in der Plane 1 zu einer Sollbruchstelle.

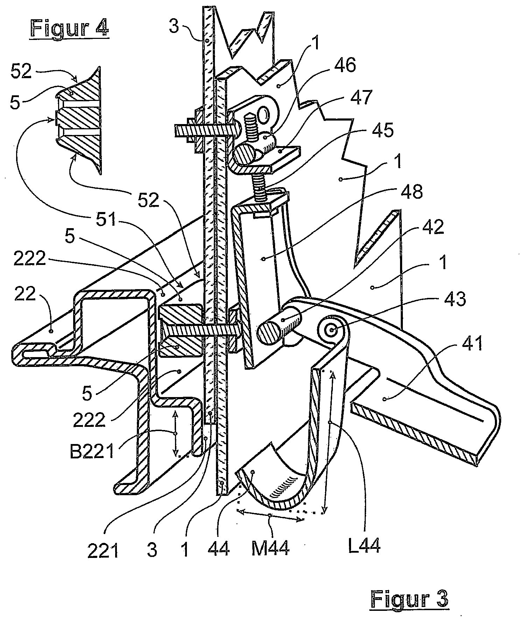

Die **Figur 3** zeigt das wesentliche Verdienst der Erfindung, nämlich das Distanzstück 5. Es ist der einzige, aber ganz entscheidende Unterschied in einer ansonsten zu Figur 2 identischen Anordnung. Es bewirkt, dass sich die vorgenannte Falte nur sehr viel flacher ausbildet, sodass die Plane 1 nach dem Glattspannen ihres großen oberen Bereiches nunmehr unterhalb des Lagerbocks 47 sehr viel weniger wellig und folglich sehr viel weniger verschleißgefährdet ist.

Das Distanzstück 5 ist im Mittelpunkt der Figur 3 als Block zu sehen, der die waagerechte Zone zwischen dem nach innen zurückgesetzten Rahmenbereich 222 und der Plane 1 überbrückt, die dadurch faltenfrei auf dem Profilschenkel 221 aufliegt.

In der Ausführungsvariante der Figur 3 ist das Distanzstück 5 mit einer Niete durch das Gurtband 3 und die Plane 1 hindurch an einer kleinen Platte auf der Außenseite der Plane 1 befestigt ist. Anstelle der Niete kann eine Verschraubung, Verklammerung oder Verklebung das Distanzstück 5 halten. Eine weitere Alternative ist wenigstens ein Schlitz im Distanzstück 5, durch den das Gurtband 3 verläuft.

Die Figur 3 zeigt eindrucksvoll, wie sich das Distanzstück 5 dem nahezu senkrecht zur Plane 1 stehenden Klapphebel 41 entgegen stemmt. Dadurch verbleiben das Gurtband 3 und die Plane 1 in der Ebene des Profilschenkels 221, der zusammen mit den Außenflächen der anderen Rahmenteile des Aufbaus 2 die Auflagefläche für die Plane 1 bildet.

In Figur 3 ist sehr schön nachvollziehbar, wie sich beim Spannen der Plane 1 deren freier Bereich unterhalb des Lagerbocks 47 bewegt. Im dargestellten Betriebszustand hat der Nutzer das Spannen der Plane 1 bereits begonnen, indem er den Klapphebel 41 aus seiner senkrecht nach untern hängenden Position bereits um etwa 70° nach oben verschwenkt hat. Dabei verblieb die Auflageplatte 48 außerhalb des Innenraums, denn das Distanzstück 5 verhinderte, dass sie über die Außenseite des Profilschenkels 221 hinweg in den Innenraum des Aufbaus 2 hinein eingedrungen ist. Dadurch sind das Gurtband 3 und die Plane 1 weiterhin glatt und ungefaltet.

Auf den in Figur 3 dargestellten Betriebszustand folgt als nächster Zwischenschritt, dass der Nutzer den Haken 44 nach innen - also in Figur 3 nach links - drückt, so dass er mit seiner Maulweite M44 das unterste Ende der Plane 1 an der Kante des Profilschenkels 221 vorbei schiebt.

Durch weiteres Verschwenken des Klapphebels 41 hebt sich der Haken 44 an und findet einen ersten Widerstand am Profilschenkel 221 über das dazwischen zuerst noch locker aufliegende Ende der Plane1. Mit dieser Abstützung beginnt sich eine Spannkraft aufzubauen, die über die Verkettung von Auflageplatte 48, Gewindestange 45, Gewindemutter 46 und Lagerbock 47 den langen Bereich der Plane 1 oberhalb des Lagerbocks 47 zu spannen beginnt. Weil in diesem Zustand das allerunterste Ende der Plane 1 nur locker zwischen dem Haken 44 und dem Profilschenkel 221 eingespannt ist, kann es sich noch etwas bewegen. Ganz anders wie in Figur 2 wird es jedoch nicht durch die zur Seite hin ausbrechende Auflageplatte 48 wieder aus dieser ersten Klemmung herausgezogen. Stattdessen kann es durch den sich abwärts bewegenden Lagerbock 47 - je nach Steifigkeit der Plane 1 und nach Gleitfähigkeit des Distanzstückes 5 auf dem Rahmenbereich 222 -sogar noch etwas weiter in den Haken 44 hineingeschoben werden. Auch dieser Effekt wirkt einer möglichen Faltenbildung weiter entgegen.

Ein weiterer Vorzug der in Figur 3 gezeigten Ausführungsform ist, dass sich die Auflageplatte 48 nicht, den Verschleiß fördernd, an der Plane 1 reibt, sondern nur auf dem stabilen Nietkopf der Verbindung zwischen Distanzstück 5 und der Plane 1 aufliegt.

Die Figur 3 verdeutlicht also sehr schön den erfinderischen Schritt, wie durch die vergleichsweise kleinen, leichten und kostengünstigen Distanzstücke 5 die verschleißgefährdete, große Falte der Plane 1 in ihrer Größe ganz deutlich reduziert werden kann und damit die Lebensdauer der Plane 1 in diesem kritischen Bereich merklich verlängert werden kann.

Zu beachten ist, dass Distanzstücke 5 mit einer z.B. senkrecht zum Rahmenbereich 222 ausgerichteten Rungenkontaktfläche 52 beim Öffnen und Schließen einer als Side-Curtain ausgebildeten Plane 1 im Bereich der Rungen 7 seitlich etwas abgehoben werden müssen, damit sie sich nicht hinter den Rungen 7 verhaken.

In **Figur 4** schlägt die Erfindung als Abhilfemaßnahme vor, dass die Rungenkontaktflächen 52 der Distanzstücke 5 angeschrägt sind, so dass sie beim Auftreffen auf eine Runge 7 die Distanzstücke 5 wie einen Keil zur Seite bewegen. Damit diese seitliche Bewegung nicht ruckartig, sondern stetig beginnt, sollten als eine weiter verfeinerte Ausführungsform die Rungenkontaktflächen 52 S-förmig gewellt sein. So wie ein guter Taxifahrer zum Beschleunigen seines Fahrzeuges nur langsam das Gaspedal seines Fahrzeuges herunter drückt und es kurz vor dem Erreichen der gewünschten Geschwindigkeit wieder langsam zurück nimmt, so bewirken auch die S-förmigen Rungenkontaktflächen 52 einen solchen Geschwindigkeitsverlauf. Er vermindert die Geräuschentwicklung und den Verschleiß und erleichtert das Verschieben der Plane 1 als Side-Curtain.

### Bezugszeichenliste

- 1: Plane, zum lösbaren Verschließen der Öffnung 21
- 2: Aufbau eines Lkws 6 oder Güterwagens
- 21: seitliche Öffnungen im Aufbau 2
- 22: Rahmenprofil, bildet die Unterkante der Öffnung 21
- 221: Profilschenkel am Rahmenprofil 2, weist nach unten
- B221: Breite des Schenkels 221
- 222: Rahmenbereich, von der geschlossenen Plane 1 beabstandet
- 23: Pfosten des Aufbaus 2
- 3: flexible Gurtbänder, auf Plane 1 befestigt
- 4: Hebelspanner zum Spannen der Gurtbänder 3
- 41: Klapphebel des Hebelspanners 4
- 42: Hebel-Gelenk, verbindet Gurtband 3 mit Klapphebel 41
- 43: Haken-Hebel-Gelenk, verbindet den Klapphebel 41 mit dem Haken 44
- 44: Haken des Hebelspanners 4, umgreift den Schenkel 221 und dabei auch den daran anliegenden freien Streifen der Plane 1
- L44: freie Länge des Hakens 44
- M44: Maulweite des Hakens 44
- 45: Gewindestange im Koppelstück des Hebelspanners 4
- 46: Gewindemutter im Koppelstück
- 47: Lagerbock für Gewindemutter 46
- 48: Auflageplatte des Koppelstücks
- 5: Distanzstück, auf der Innenseite der Plane (1) gegenüber einem Hebel-Gelenk 42
- 51: Berührungsfläche Distanzstück 5 zu Rahmenbereich 222
- 52: Rungenkontaktflächen des Distanzstückes 5, berühren beim Verschieben der Plane 1 die Rungen 7 im Rahmenbereich 222
- 6: Lkw
- 61: Ladefläche des Lkw 6
- 7: Runge, zwischen Rahmenprofil 22 und oberem Holm des Aufbaus 2

## Patentansprüche

1. Plane (1) zum lösbaren Verschließen einer seitlichen Öffnung (21) im Aufbau (2) eines Lkws (6) oder Güterwagens,
- wobei die Unterkante der Öffnung (21) ein Rahmenprofil (22) bildet, das
- einen nach unten weisenden Profilschenkel (221) sowie
- innerhalb der Öffnung (21) einen von der geschlossenen Plane (1) beabstandeten Rahmenbereich (222) aufweist und
- wobei auf der Plane (1) mehrere flexible Gurtbänder (3) befestigt sind, deren untere Enden jeweils mit einem Klapphebel (41) eines Hebelspanners (4) über ein Hebel-Gelenk (42) gelenkig verbunden sind, und der Klapphebel (41) über ein Haken-Gelenk (43) gelenkig mit einem Haken (44) verbunden ist,
- der im geschlossenen Zustand den Profilschenkel (221) umgreift und
- der dabei einen unteren Bereich der Plane (1) auf den Profilschenkel (221) presst,
**dadurch gekennzeichnet,**
- **dass** die freie Länge (L44) des Hakens (44) größer als die Breite (B221) des Profilschenkels (221) ist und
- **dass** auf der Innenseite der Plane (1) gegenüber wenigstens einem Hebel-Gelenk (42) jeweils ein Distanzstück (5) befestigt ist, das im geschlossenen Zustand der Plane (1) deren Abstand vom Rahmenbereich (222) zumindest teilweise überbrückt.

2. Plane (1) nach dem vorhergehenden Anspruch 1,
**dadurch gekennzeichnet, dass** eine gegenüber dem Distanzstück (5) vergrößerte und druckfeste Andruckplatte an die planenseitige Auflagefläche des Distanzstückes (5) angeformt ist oder als zusätzliche Platte an der Innen- oder an der Außenseite der Plane (1) in die Verbindung von Plane (1) und Distanzstück (5) integriert ist.

3. Plane (1) nach einem der vorhergehenden Ansprüche,
**dadurch gekennzeichnet, dass** der Rahmenbereich (222) im wesentlichen eine Ebene ist,
- die zur geschlossenen Plane (1) parallel ausgerichtet ist und
- die vom Distanzstück (5) mit dessen Berührungsfläche (51) berührt wird.

4. Plane (1) nach dem vorhergehenden Anspruch 3,
**dadurch gekennzeichnet, dass**
wenigstens eine von zwei, an die Berührungsfläche (51) angrenzenden Rungenkontaktflächen (52) des Distanzstücks (5) einen spitzen Winkel mit dem Rahmenprofil (22) bilden.

5. Plane (1) nach dem vorhergehenden Anspruch 4,
**dadurch gekennzeichnet, dass** die Rungenkontaktflächen (52) als eine S-förmige Welle geformt sind.

6. Plane (1) nach den vorhergehenden Ansprüchen 4 oder 5,
**dadurch gekennzeichnet, dass** die Rungenkontaktflächen (52) wenigstens ein Rad oder eine Rolle aufweisen, welche(s) sich auf den Rungen (7) abrollen kann.

7. Plane (1) nach einem der vorhergehenden Ansprüche,
**dadurch gekennzeichnet, dass**
das Hebel-Gelenk (42) an einem Ende des Klapphebels (41) angeordnet ist und die freie Länge (L44) des Hakens (44) größer als
- die Breite des Profilschenkels (221)
- zuzüglich des Radiusses des Hebel-Gelenks (42) und
- zuzüglich dessen Abstandes zum Haken-Gelenk (43) ist.

8. Plane (1) nach einem der vorhergehenden Ansprüche,
**dadurch gekennzeichnet, dass** die Gurtbänder (3)
- auf der Innenseite der Plane (1) befestigt sind und
- mit wenigstens einer Verschraubung und/oder einer Niete und/oder einer anderen mechanischen Verbindung durch die Plane (1) hindurch und
- mittels eines Koppelstücks mit dem Hebel-Gelenk (42) verkoppelt sind, wobei das Koppelstück
- ein kurzer Abschnitt eines Gurtbandes oder
- ein kurzes Gurtband mit einer lösbaren Klemmvorrichtung oder
- eine Auf-Ab-wicklung für ein Gurtband oder
- eine Kette, ein Lochband oder eine Zahnstange, die stufenweise in ein Gegenstück einhängbar ist, oder
- eine Gewindestange (45) mit einer Gewindemutter (46), die in einem Lagerbock (47) einhakbar ist, oder
- eine andere Längenjustage ist.

9. Plane (1) nach dem vorhergehenden Anspruch 8
**dadurch gekennzeichnet, dass** an das Koppelstück eine Auflageplatte (48) angeformt ist oder das Koppelstück als eine Auflageplatte (48) ausgebildet ist, die auf der Außenseite der Plane (1) aufliegt.

10. Plane (1) nach einem der vorhergehenden Ansprüche,
**dadurch gekennzeichnet, dass** der Hakens (44) eine Maulweite (M44) aufweist, die erheblich größer als die Dicke des Profilschenkels (221) ist.

## Claims

1. Tarpaulin (1) for releasably closing a lateral opening (21) in the body (2) of a truck (6) or freight wagon,
- wherein the bottom edge of the opening (21) forms a frame profile (22) which features
- a downwardly pointing profile leg (221) and
- inside the opening (21) a frame area (222) being spaced from the closed tarpaulin (1) and
- wherein a plurality of flexible webbing straps (3) are fastened onto the tarpaulin (1),
and the lower ends of the webbing straps (3) are each hinged to a folding lever (41) of a lever tensioner (4) via a lever joint (42),
and the folding lever (41) is hinged to a hook (44) via a hook joint (43)
- which hook (44), in the closed state, engages around the profile leg (221) and
- which hook (44) thereby presses a lower region of the tarpaulin (1) onto the profile leg (221).
**characterized in**
- **that** the free length (L44) of the hook (44) is greater than the width (B221) of the profile leg (221),
and
- **that** on the inner side of the tarpaulin (1) opposite at least one lever joint (42), a spacer (5) is fastened, which spacer (5) bridges, at least partially, the gap between the frame area (222) and the tarpaulin (1), when the latter is in the closed state.

2. Tarpaulin (1) according to the preceding claim 1,
**characterized in that** a pressure-resistant pressure plate, which is larger than the spacer (5),
- is integrally formed on to the spacer (5) on its tarpaulin supporting side
or
- is integrated as an additional plate on the inside or on the outside of the tarpaulin (1) in the connection between the tarpaulin (1) and the spacer (5).

3. Tarpaulin (1) according to one of the preceding claims,
**characterized in that** the frame area (222) is essentially a plane,
- which is aligned parallel to the closed tarpaulin (1) and
- which is contacted by the spacer (5) with its contact surface (51).

4. Tarpaulin (1) according to the preceding claim 3,
**characterized in that**
at least one of the two stanchion contact surfaces (52) of the spacer (5) adjacent to the contact surface (51) form an acute angle with the frame profile (22).

5. Tarpaulin (1) according to the preceding claim 4,
**characterized in that** the stanchion contact surfaces (52) are shaped as an S.

6. Tarpaulin (1) according to the preceding claims 4 or 5,
**characterized in that** the stanchion contact surfaces (52) comprise at least one wheel or roller which can roll on the stanchions (7).

7. Tarpaulin (1) according to one of the preceding claims,
**characterized in**
**that** the lever joint (42) is arranged at one end of the folding lever (41)
and
**that** the free length (L44) of the hook (44) is greater than
- the width of the profile leg (221)
- plus the radius of the lever joint (42) and
- plus its distance from the hook joint (43).

8. Tarpaulin (1) according to one of the preceding claims,
**characterized in that** the webbing straps (3)
- are fastened to the inside of the tarpaulin (1) and
- are coupled with at least one screw connection and/or a rivet and/or
another mechanical connection through the tarpaulin (1) to the lever joint (42) by means of a coupling piece, the coupling piece being
- a short section of a webbing or
- a short webbing with a releasable clamping device or
- an un-up-winding for a webbing or
- a chain, a perforated band or a toothed rack which is stepwise engageable in a counterpart, or
- a threaded rod (45) with a threaded nut (46), which can be hooked into a bearing block (47),
or
- another length adjustment.

9. Tarpaulin (1) according to the preceding claim 8
**characterized in**
**that** a support plate (48) is formed on the coupling piece or
**that** the coupling piece is formed as a support plate (48) which rests on the outside of the tarpaulin (1).

10. Tarpaulin (1) according to one of the preceding claims,
**characterized in**
**that** the hook (44) has a mouth width (M44) that is considerably larger than the thickness of the profile leg (221).

## Revendications

1. Bâche (1) pour fermer de manière amovible une ouverture latérale (21) dans la carrosserie (2) d'un camion (6) ou d'un wagon de marchandises,
- et le bord inférieur de l'ouverture (21) forme un profilé de cadre (22),
- qui possède une branche du profilé (221) orientée vers le bas et qui
- possède à l'intérieur de l'ouverture (21) une zone de cadre (222), qui s'étend à partir de la bâche fermée (1) à une certaine distance
- et sur la bâche (1) sont fixées plusieurs sangles flexibles (3),
dont les extrémités inférieures sont respectivement reliées à un levier rabattable (41) d'un tendeur à levier (4) à l'aide d'une charnière du levier (42).
et le levier rabattable (41) est relié par une charnière du crochet (43) à un crochet (44)
- qui, à l'état fermé de la bâche (1), entoure la branche du profilé (221)
et
- qui, ce faisant, presse une zone inférieure de la bâche (1) sur la branche du profilé (221), **caractérisée**
- **en ce que** la longueur libre (L44) du crochet (44) est plus grande que la largeur (B221) de la branche du profilé (221) et
- **en ce que**, sur le côté intérieur de la bâche (1), en face d'au moins une
charnière du levier (42), une entretoise (5) est fixée, qui, à l'état fermé de la bâche (1), comble la distance de celle-ci par rapport à la zone du cadre (222) au moins partiellement.

2. Bâche (1) selon la revendication 1 précédente,
**caractérisée en ce qu'**une plateau de presseur agrandi par rapport à l'entretoise (5) et résistant à la pression est formé sur la surface d'appui côté bâche de l'entretoise (5) ou est intégré comme plateau supplémentaire sur le côté intérieur ou extérieur de la bâche (1) dans la liaison entre la bâche (1) et l'entretoise (5).

3. Bâche (1) selon l'une des revendications précédentes,
**caractérisée en ce que** la zone de cadre (222) est essentiellement un plan,
- qui est orienté parallèlement à la bâche fermée (1) et
- qui est en contact avec l'entretoise (5) par sa surface de contact (51).

4. Bâche (1) selon la revendication 3 précédente,
**caractérisée en ce**
**que** l'entretoise (5) possède deux surfaces de contact (51), dont au moins une avoisine à la surface de contact avec les ranchers (52) et forme un angle aigu avec le profilé de cadre (22).

5. Bâche (1) selon la revendication 4 précédente,
**caractérisée en ce que** les surfaces de contact avec les ranchers (52) ont la forme d'un onde en S.

6. Bâche (1) selon les revendications 4 ou 5 précédentes,
**caractérisée en ce que** les surfaces de contact avec les ranchers (52) possèdent au moins une roue ou un rouleau qui peut rouler sur les ranchers (7).

7. Bâche (1) selon l'une des revendications précédentes,
**caractérisée**
**en ce que** la charnière du levier (42) est située à une extrémité du levier rabattable (41) et **en ce** que la longueur libre (L44) du crochet (44) est plus grande que
- la largeur de la branche du profilé (221)
- plus le rayon de charnière du levier (42) et
- plus sa distance par rapport à charnière du crochet (43).

8. Bâche (1) selon l'une des revendications précédentes,
**caractérisée en ce que** les sangles (3)
- sont fixées sur la face intérieure de la bâche (1) et
- sont couplées par au moins un vissage et/ou un rivetage et/ou
d'une autre liaison mécanique à travers la bâche (1) et
- au moyen d'une pièce de couplage à charnière du levier (42) et
la pièce de couplage étant
- un court tronçon de sangle ou
- une sangle courte avec un de serrage détachable ou
- un en/de-rouleur pour une sangle ou
- une chaîne, une bande perforée ou une crémaillère qui s'insère progressivement dans la une contre-pièce, ou
- une tige filetée (45) avec un écrou fileté (46) qui
pouvant être accroché à un support de palier (47), ou
- un autre ajustement de la longueur.

9. Bâche (1) selon la revendication 8 précédente.
**caractérisée en ce qu'**une plaque d'appui (48) est formée sur la pièce de couplage ou la pièce de couplage est conçue comme une plaque d'appui (48) qui repose sur le côté extérieur de la bâche (1).

10. Bâche (1) selon l'une des revendications précédentes,
**caractérisée en ce que** le crochet (44) présente une largeur de mâchoire (M44) qui est considérablement plus grande que l'épaisseur de la branche du profilé (221).
